# EUROPEAN PATENT APPLICATION

(11) **EP 3 214 022 A1**
(43) Date of publication of application: **06.09.2017**
(21) Application number: 14905141.9
(22) Date of filing: 27.10.2014
(51) Int. Cl.: B65G 1/12, B65G 1/133, G05B 19/418

(54) **AUTOMATIC DENSE WAREHOUSE APPARATUS**

(71) Applicant: Shenzhen Whalehouse Technology Company Limited, Shenzhen, Guangdong 518000 (CN)
(72) Inventor: LI, Linzi, Shenzhen, Guangdong 518000 (CN)
(74) Representative: Reiser & Partner Patentanwälte mbB
(86) International application number: PCT/CN2014/089609
(87) International publication number: WO 2016/065523

(57) **Abstract**

The present invention provides an automatic dense warehouse apparatus including a rack and a plurality of goods containers supported on the rack. The rack defines at least one fixed goods-picking location. Each of the goods containers is supported on the rack for movement relative to the rack, and the goods-picking location is defined on a movement path of the goods containers.

## Description

The present invention relates to automatic dense warehouse apparatus and, in particular, to an automatic warehouse with a simple structure and high density.

### Background

Currently, three-dimensional warehouses are commonly used in warehouse management in the storage and logistics field. That is, a plurality of racks is arranged, and goods are picked and placed by workers or by stackers moving back and forth along an aisle. This type of warehouse management has a poor efficiency and is inconvenient to use.

An automatic warehouse system with mobile racks was proposed in the prior art, in which a rack is transported by a robot to a fixed working window for loading and unloading goods, and is then transported back by the robot. However, this warehouse management imposes an over-high requirement on the hardware. In order to transport the rack and goods to a designated position under the system control, the robot must be equipped with devices such as optical sensors and infra-red sensors, and must be capable of autonomously avoiding obstacles and finding the path to the designated position. In practice, this management can hardly be implemented and leads to a high cost of purchasing the hardware. In addition, space needs to be left in the racks for movement of the robot and goods containers, which may reduce the density of the goods container arrangement.

Therefore, there is a need for an automatic dense warehouse apparatus that has a low cost and can be conveniently managed.

### Summary

Accordingly, the present disclosure provides an automatic dense warehouse apparatus, which reduces the warehouse construction and management cost and simplifies its control system.

The present invention provides an automatic dense warehouse apparatus including a rack and a plurality of goods containers supported on the rack. The rack defines at least one fixed goods-picking location. Each of the goods containers is supported on the rack for movement relative to the rack, and the goods-picking location is defined on a movement path of the goods containers.

In one embodiment, the movement path of the goods containers can be a circulation path and all of the goods containers move on the rack along the circulation path.

In one embodiment, the circulation path can be a rectangular path.

In one embodiment, the rectangular path can comprise a long side path and a short side path, and the automatic dense warehouse apparatus can comprise a longitudinal driving device for driving goods containers on the long side path.

In one embodiment, the longitudinal driving device can be disposed at an end of the long side path.

In one embodiment, the longitudinal driving device can comprise a push rod driven by a pneumatic cylinder.

In one embodiment, for two adjacent goods containers on the long side path, movement of a front goods container can be realized by pushing of a rear goods container.

In one embodiment, the automatic dense warehouse apparatus can comprise a transverse driving device for driving a goods container on the short side path.

In one embodiment, the transverse driving device can be disposed beneath the goods container.

In one embodiment, the automatic dense warehouse apparatus can comprise a carrier bracket that is driven by the transverse driving device to slide along the short side path, and the carrier bracket is configured to support the goods container.

In one embodiment, the rectangular path can comprise a long side path and a short side path, and a length of the short side path is equal to a combined length of two container spaces, with the goods-picking location defined in one of the two container spaces.

In one embodiment, rollers in contact with bottom portions and/or side portions of the goods containers can be disposed on the rack along the movement path.

In one embodiment, the goods containers can comprise at least two layers of goods containers arranged in a vertical direction and each layer of goods containers can be moved independently along its respective circulation path.

In one embodiment, the rack can comprise a slide rail such that the goods containers are capable of movement along the slide rail.

The present invention further provides an automatic dense warehouse apparatus including a plurality of goods containers. The plurality of goods containers can be capable of movement along a circulation path. The automatic dense warehouse apparatus can further comprise a controller. When a goods container containing ordered goods is identified, the controller can control the plurality of goods containers to move all together along the circulation path so as to move the identified goods container to a goods-picking location.

In one embodiment, at least part of the goods containers can be arranged sequentially contacting with one another, and movement of a front goods container is realized by pushing of an adjacent rear goods container.

In one embodiment, the circulation path can be a rectangular path.

In one embodiment, the goods containers can be moved in a stepping manner, and a length of each step can be equal to a length of one container space.

In view of the foregoing, the present invention provides an automatic dense warehouse apparatus, in which a target goods container is moved to a fixed goods-picking location by moving the goods containers all together circulatingly along a circulation path. This simplifies the driving and control of the goods containers as well as significantly reduces the warehouse fabrication and operation cost. In addition, space for movement of the goods containers as required in the prior art is no longer required to be left in the rack, thereby greatly increasing the density of the goods container arrangement.

### Brief description of the drawings

Fig. 1 is a perspective view of an automatic dense warehouse apparatus according to one embodiment of the present invention.
Fig. 2 is a top view of the automatic dense warehouse apparatus according to one embodiment of the present invention.
Fig. 3 is a side elevation view of the automatic dense warehouse apparatus according to one embodiment of the present invention.

### Description of the embodiments

Before embodiments of the invention are explained in detail, it is to be understood that the invention is not limited in its application to the details of construction and the arrangement of components set forth in the following description or illustrated in the accompanying drawings. The invention is capable of other embodiments. Also, it is to be understood that the phraseology and terminology used herein is for the purpose of description and should not be regarded as limiting. Use of "including" and "comprising" and variations thereof as used herein is meant to encompass the items listed thereafter and equivalents thereof as well as additional items. In particular, the indefinite article "a" or "an" does not limit the number of an item to be one; rather, there may be a plurality of such items.

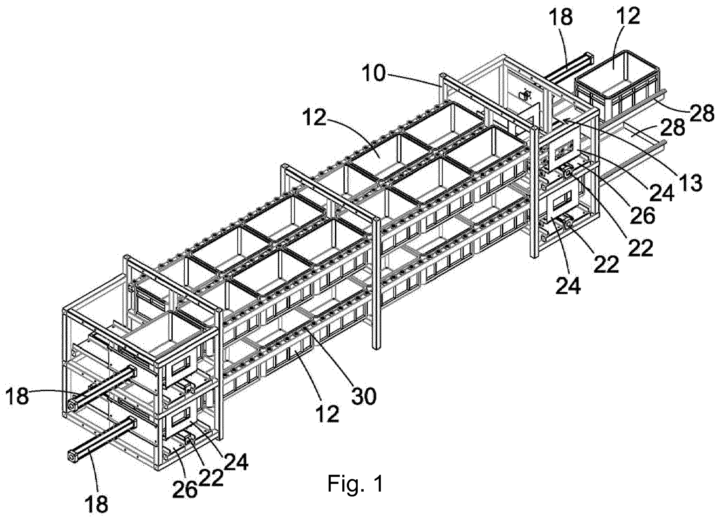

Fig. 1 is a perspective view of an automatic dense warehouse apparatus according to one embodiment of the present invention. The automatic dense warehouse apparatus includes a rack 10 and a plurality of goods containers 12 supported on the rack 10. The rack 10 defines at least one fixed goods-picking location, and an operator is deployed beside the fixed goods-picking location 13 to pick ordered goods. These goods containers 12 are supported on the rack 10 for movement relative to the rack 10, and the goods-picking location 13 is located on a movement path of the goods containers 12. In the embodiment illustrated in Fig. 1, the goods-picking location 13 is arranged at an end of the rack 10. In this embodiment, the rack 10 includes a slide rail along the movement path, such that the goods containers 12 slide along the slide rail.

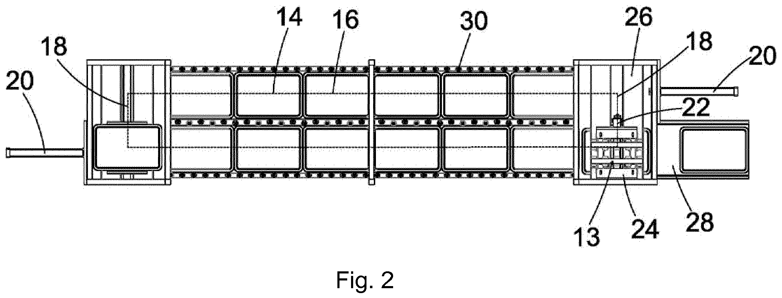

In this embodiment, the movement path of the goods containers 12 is a circulation path, along which the goods containers 12 move on the rack 10. Referring to Fig. 2, which is a top view of the automatic dense warehouse apparatus, the goods containers 12 are arranged in two columns, with the goods containers 12 in each column sequentially contacting with one another and moving circulatingly along a rectangular path 14. The rectangular path 14 has long side paths 16 and short side paths 18.

On each long side path 16 of the rectangular path 14, the goods containers 12 are driven to move by a longitudinal driving device 20 disposed on the rack 10. Each goods container 12 moves in a stepping manner, and a length of each step is equal to a length of one container space. The longitudinal driving devices 20 are disposed at ends of the rectangular path 16. In the illustrated embodiment, the longitudinal driving devices 20 include push rods 20 driven by pneumatic cylinders. The push rods 20 are disposed at two diagonal corner positions of the rectangular path 14. As such, each push rod 20 is responsible for pushing one column of the goods containers 12. In the illustrated embodiment, in fact, the push rod 20 pushes only one goods container 12 on the rectangular path 16 that is closest to the push rod 20. For the remaining goods containers 12 on each long side path 16, movement of a front goods container 12 is realized by pushing of a rear goods container 12.
It should be noted that driving the goods containers 12 using the push rods 20 is only one implementation manner, and the goods containers 12 may also be driven in other suitable manners. For example, multiple or all goods containers 12 can be pushed simultaneously by a single driving mechanism; alternatively, each goods container 12 is equipped with its own driving mechanism.

On each short side path 18 of the rectangular path 14, the goods container 12 is driven to move by a transverse driving device 22 disposed on the rack 10. In the illustrated embodiment, the transverse driving device 22 is disposed beneath the goods container 12. In particular, the rack 10 includes a carrier bracket 24 that is movable back and forth along each short side path 18. The carrier bracket 24 is used to support the goods container 12. The rack 10 includes a track 26 along the short side path 18, and the carrier bracket 24 moves back and forth along the track 26. The driving device is disposed at a bottom of the carrier bracket 24 to drive the carrier bracket 24 to move back and forth. In other embodiments, the transverse driving device 22 may be constructed and operated in another suitable manner.

In the illustrated embodiment, a length of the short side path 18 is equal to a combined length of two container spaces, with the goods-picking location 13, such as the goods-picking location 13 shown in Fig. 2, being defined in one of the two container spaces. The rack 10 includes a container tray 28 disposed adjacent the goods-picking location 13. When a goods container 12 containing ordered goods is moved to the goods-picking location 13, the goods container 12 is pushed to the container tray 28 by a driving mechanism or manually pulled to the goods container tray 28 by an operator for picking operation. When the picking operation is completed, the goods container 12 is moved back to the goods-picking location 13 for circulation movement.

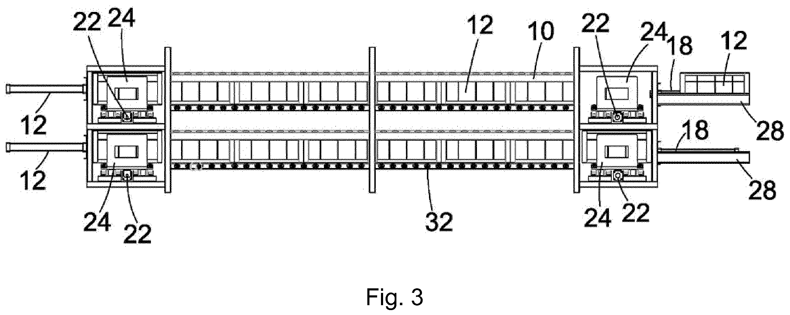

In order to smoothly slide the goods containers 12, rollers 30,32 are disposed along the movement path of the goods containers 12, in contact with the goods containers 12. For example, Fig. 1 and Fig. 2 illustrate rollers 30 in contact with side portions of the goods containers 12, and Fig. 3 is a side view of the automatic dense warehouse apparatus, which illustrates rollers 32 in contact with bottom portions of the goods containers 12. These rollers 30, 32 may be disposed on the rack 10 or, alternatively, may be disposed on the goods containers 10.

In this embodiment, the automatic dense warehouse apparatus includes two layers of goods containers 12 arranged in a vertical direction, and each layer of the goods containers 12 move independently along its respective circulation path. Therefore, two longitudinal driving devices 20 and two transverse driving devices 22 are disposed at each end of the automatic dense warehouse apparatus. In addition, there are two goods-picking locations 13 at one end of the automatic dense warehouse apparatus. It should be understood that the automatic dense warehouse apparatus may include a single layer or more than two layers of goods containers 12. As such, the number of the layers of the goods containers 12 is dependent on actual needs.

The automatic dense warehouse apparatus further includes a controller for controlling the movement of the goods containers 12. When a goods container 12 containing ordered goods is identified, the controller controls all goods containers 12 of the layer that includes the identified goods container 12 to move along the circulation path 14 so as to move the identified goods container 12 to the goods-picking location 13.

Below, the movement of the goods containers is described in connection with one layer of the goods containers 12.

At the state shown in Fig. 2, one of the goods containers 12 is disposed on the tray 28 for the operator to pick goods. After the picking operation is completed, the goods container 12 can be driven back to the goods-picking location 13 by a driving mechanism or pushed back to the goods-picking location 13 manually by the operator. The controller then controls the transverse driving device 22 to drive the goods container 12 at the goods-picking location 13 to the other container space on the short side path 18. At this time, the goods container 12 is aligned with the other column of goods containers. The controller then controls the longitudinal driving device 20 to push the goods container 12 into the long side path 16. As a result, one goods container 12 at the other end of the long side path 16 is pushed into the short side path 18 at the other end of the rack 12. At the same time or afterwards, the column of goods containers 12 aligned with the goods-picking location 13 are also pushed toward the goods-picking location 13 by the longitudinal driving device 20 at the other end of the rack 10, the result being that a new goods container 12 enters the goods-picking location 13. If this new goods container 12 is not a target goods container 12, i.e. a goods container 12 containing ordered goods, then this goods container 12 is moved to the other container space on the short side path 18. If the new goods container 12 is the target goods container 12, then the goods container 12 is moved to the tray 28 for picking operation. When a new goods container 12 enters the goods-picking location 13, it indicates that the container space on the short side path 18 at the other end of the rack 10, aligned with the goods-picking location 13, is empty. Therefore, the transverse driving device 22 at the other end of the rack 10 starts to operate to drive one goods container 12 into this empty position. Circulation movement of the goods containers 12 is thus accomplished.

In the embodiment described above, the goods containers 12 are moved circulatingly all together. Therefore, space is no longer required to be left in the rack 10 for movement of the goods containers 12 as required in the prior art, which makes it possible to arrange the goods containers 12 with high density. For example, the length of the short side path 18 is equal to the combined length of two container spaces, which means that the two columns of goods containers 12 are arranged almost contacting each other.

In the embodiment described above, the goods containers 12 move along the rectangular circulation path and are arranged into two columns, which may lead to a dense arrangement of the goods containers. Theoretically, the goods containers 12 can be arranged along a circulation path of any shape, as long as circulation movement of the goods containers 12 can be realized.

In the embodiment described above, there is only one goods-picking location. There may be multiple goods-picking locations allowing multiple operators to operate at the same time. For example, one goods-picking location can be set at each end of the rack 10. As the goods containers 12 have multiple layers in those embodiments, the goods-picking location 13 of each layer of the goods containers 12 can be set at a different position. For example, the goods-picking locations 13 of some layers of the goods containers 12 are set at one end of the rack, while the goods-picking locations 13 of the remaining goods containers 12 are set at the other end of the rack 10.

As described in the description above, the goods containers 12 of the above embodiment are moved step by step, with the length of each step equal to the length of each container space. In another embodiment, the goods containers 12 may also move continuously. For example, the goods containers 12 may be arranged into a ring, such that the goods containers 12 move along a ring movement path, and the goods-picking location 13 is defined at a position on the ring movement path.

In summary, the present invention provides an automatic dense warehouse apparatus with high density goods containers 12, in which a target goods container 12 is moved to a fixed goods-picking location 13 by moving the goods containers 12 all together circulatingly along a circulation path. This simplifies the driving and control of the goods containers 12, as well as significantly reduces the warehouse fabrication and operation cost. In addition, space for movement of the goods containers 12 as required in the prior art is no longer required to be left in the rack 10, thereby greatly increasing the density of the goods container 12 arrangement.

The concept described in this disclosure can be carried out in various ways without departing from the spirits and features of the present invention. The disclosed embodiments are illustrative rather than restrictive. Therefore, the scope of the invention is to be determined by reference to the claims that follow rather than the description above. Various modifications made under the literal meanings and within the equivalent scope of the claims shall be regarded as falling within the scope of the claims.

## Claims

1. An automatic dense warehouse apparatus comprising a rack and a plurality of goods containers supported on the rack, **characterized in that** the rack defines at least one fixed goods-picking location, each of the goods containers is supported on the rack for movement relative to the rack, and the goods-picking location is defined on a movement path of the goods containers.

2. The automatic dense warehouse apparatus of claim 1, **characterized in that** the movement path of the goods containers is a circulation path, and all of the goods containers move on the rack along the circulation path.

3. The automatic dense warehouse apparatus of claim 2, **characterized in that** the circulation path is a rectangular path.

4. The automatic dense warehouse apparatus of claim 3, **characterized in that** the rectangular path comprises a long side path and a short side path and that the automatic dense warehouse apparatus comprises a longitudinal driving device for driving goods containers on the long side path.

5. The automatic dense warehouse apparatus of claim 4, **characterized in that** the longitudinal driving device is disposed at an end of the long side path.

6. The automatic dense warehouse apparatus of claim 5, **characterized in that** the longitudinal driving device comprises a push rod driven by a pneumatic cylinder.

7. The automatic dense warehouse apparatus of claim 4, **characterized in that** for two adjacent goods containers on the long side path, movement of a front goods container is realized by pushing of a rear goods container.

8. The automatic dense warehouse apparatus of claim 4, **characterized in that** the automatic dense warehouse apparatus comprises a transverse driving device for driving a goods container on the short side path.

9. The automatic dense warehouse apparatus of claim 8, **characterized in that** the transverse driving device is disposed beneath the goods container.

10. The automatic dense warehouse apparatus of claim 8, **characterized in that** the automatic dense warehouse apparatus comprises a carrier bracket that is driven by the transverse driving device to slide along the short side path and that the carrier bracket is configured to support the goods container.

11. The automatic dense warehouse apparatus of claim 3, **characterized in that** the rectangular path comprises a long side path and a short side path and that a length of the short side path is equal to a combined length of two container spaces, with the goods-picking location being defined in one of the two container spaces.

12. The automatic dense warehouse apparatus of claim 1, **characterized in that** rollers in contact with bottom portions and/or side portions of the goods containers are disposed on the rack along the movement path.

13. The automatic dense warehouse apparatus of claim 1, **characterized in that** the goods containers comprise at least two layers of goods containers arranged in a vertical direction and that each layer of goods containers move independently along its respective circulation path.

14. The automatic dense warehouse apparatus of claim 1, **characterized in that** the rack comprises a slide rail such that the goods containers are capable of movement along the slide rail.

15. An automatic dense warehouse apparatus comprising a plurality of goods containers, **characterized in that** the plurality of goods containers is capable of movement along a circulation path, the automatic dense warehouse apparatus further comprises a controller, and when a goods container containing ordered goods is identified, the controller controls the plurality of goods containers to move all together along the circulation path so as to move the identified goods container to a goods-picking location.

16. The automatic dense warehouse apparatus of claim 15, **characterized in that** at least part of the goods containers are arranged sequentially contacting with one another, and movement of a front goods container is realized by pushing of an adjacent rear goods container.

17. The automatic dense warehouse apparatus of claim 15, **characterized in that** the circulation path is a rectangular path.

18. The automatic dense warehouse apparatus of claim 15, **characterized in that** the goods containers move in a stepping manner, and a length of each step is equal to a length of one container space.
